# EUROPÄISCHE PATENTSCHRIFT

(11) **EP 3 658 440 B1**
(45) Veröffentlichungstag und Bekanntmachung des Hinweises auf die Patenterteilung: **07.06.2023**
(21) Anmeldenummer: 18766135.0
(22) Anmeldetag: 21.08.2018
(51) Int. Cl.: B61L 25/02, B61L 3/00, B61L 3/02, B61L 23/00

(54) **ERFASSUNG UND OPTIMIERUNG DER HALTEPUNKTGENAUIGKEIT EINES FAHRZEUGS**
DETECTING AND OPTIMIZING THE STOPPING-POINT ACCURACY OF A VEHICLE
DÉTECTION ET OPTIMISATION DE LA PRÉCISION DE POINT D'ARRÊT D'UN VÉHICULE

(30) Priorität: 21.09.2017 DE 102017216712
(43) Veröffentlichungstag der Anmeldung: 03.06.2020
(73) Patentinhaber: Siemens Mobility GmbH, 81739 München (DE)
(72) Erfinder: BIENEK, Frank, 38304 Wolfenbüttel (DE); KNOLLMANN, Volker, 38126 Braunschweig (DE); PÖSEL, Bernhard, 38154 Königslutter (DE); TASLER, Gerd, 38102 Braunschweig (DE)
(74) Vertreter: Siemens Patent Attorneys
(86) Internationale Anmeldenummer: PCT/EP2018/072523
(87) Internationale Veröffentlichungsnummer: WO 2019/057421

(56) Entgegenhaltungen:
- EP-A1- 2 316 706
- WO-A1-01/66401
- WO-A1-2010/040654
- WO-A1-2016/035597
- DE-A1-102012 219 901
- GB-A- 2 424 288

## Beschreibung

Die vorliegende Erfindung betrifft ein System zur Erfassung und Optimierung der Haltepunktgenauigkeit eines Fahrzeugs.

Beim Betrieb von schienengebundenen Verkehrssystemen erfolgt eine zunehmende Automatisierung, was beispielsweise am Einsatz von fahrerlosen Systemen bei Metros oder U-Bahnen erkennbar ist. Im Zuge dieser Automatisierung, insbesondere im Bereich der Nahverkehrssysteme, ist auch ein Schutz der Fahrgäste am Bahnsteig erforderlich. Hierzu werden unter anderem Bahnsteigtüren eingesetzt, welche in oft aus Glas bestehenden Wänden, die die Plattform eines Haltepunktes vom Bereich des Schienen umfassenden Gleises trennen, integriert sind. Auf diese Weise wird ein Sturz von Personen in den Fahrweg beziehungsweise in das Gleis verhindert. Der Einsatz einer derartigen Schutzmaßnahme bedingt jedoch, dass bei einem Halt des Fahrzeuges die Fahrzeugtüren desselben möglichst genau in Deckung mit den Bahnsteigtüren gebracht werden müssen, da nur so ein zügiger und gefahrloser Fahrgastwechsel stattfinden kann.

Die dafür angestrebte Haltepunktgenauigkeit lässt derzeit Abweichungen von circa 10 cm bis circa 30 cm zu. Werden die Fahrzeugtüren mit den Bahnsteigtüren nicht ausreichend in Deckung gebracht, so verengt sich der Durchgang für den Fahrgastwechsel und es kann dadurch zu einem Gedränge unter den Fahrgästen bis hin zu einer Panikreaktion bei denselben kommen. Infolgedessen kann es zu verletzten oder sogar möglicherweise getöteten Personen kommen.

Die WO 2016/035597 A1 und die US 2017/305396 A1 beschreiben ein automatisches Zugsteuersystem und eine Bremssteuerungsvorrichtung. Die DE 10 2012 219901 A1 beschreibt ein Verfahren zur Erhöhung der Haltegenauigkeit eines bewegten Objekts. Es besteht daher die Aufgabe, eine verbesserte Erfassung der im Betrieb eines schienengebundenen Fahrzeugs erreichten Haltepunktgenauigkeit beziehungsweise der hinsichtlich der Haltepunktgenauigkeit auftretenden Abweichungen bereitzustellen und dadurch eine Optimierung der Haltepunktgenauigkeit durch eine automatisierte Korrektur der Bremskurve eines Fahrzeuges zu ermöglichen. Dadurch soll sicherungstechnisch eine Haltepunktgenauigkeit von 10 cm oder weniger realisiert werden können.

Erfindungsgemäß wird eine Vorrichtung zur Erfassung und Optimierung der Haltepunktgenauigkeit eines Fahrzeugs gemäß Patentanspruch 1 zur Verfügung gestellt, umfassend wenigstens eine an dem Fahrzeug anordenbare Sensoreinheit und wenigstens eine mit der wenigstens einen Sensoreinheit verbundene Auswerteeinheit. Die wenigstens eine Sensoreinheit ist zur Messung eines Abstands relativ zu einem an einem von dem Fahrzeug befahrenen Haltepunkt angeordneten Abstandsprofil sowie zur Übermittlung des Messergebnisses an die wenigstens eine mit der Sensoreinheit verbundene Auswerteeinheit ausgebildet.

Erfindungsgemäß wird ein System zur Erfassung und Optimierung der Haltepunktgenauigkeit eines Fahrzeugs gemäß Patentanspruch 2 zur Verfügung gestellt, welches wenigstens eine an dem Fahrzeug angeordnete Sensoreinheit, wenigstens ein an einem von dem Fahrzeug befahrenen Haltepunkt angeordnetes Abstandsprofil und wenigstens eine mit der wenigstens einen Sensoreinheit verbundene Auswerteeinheit umfasst. Erfindungsgemäß ist die wenigstens eine Sensoreinheit zur Messung des Abstandes zu dem wenigstens einen Abstandsprofil und zur Übermittlung des Messergebnisses an die wenigstens eine mit der Sensoreinheit verbundene Auswerteeinheit ausgebildet.

Die erfindungsgemäße Lösung hat den Vorteil, dass durch eine Auswertung von analogen Messwerten, welche aus einer Messung des Abstandes von einer Sensoreinheit zu einem streckenseitig montierten, korrespondierenden Abstandsprofil resultieren, eine signaltechnisch sichere Erfassung der im Betrieb erreichten absoluten Haltepunktgenauigkeit erfolgen kann.

Dadurch wird es zudem ermöglicht, eine Optimierung der Haltepunktgenauigkeit durch automatisierte Korrektur der Bremskurve für das Fahrzeug durchzuführen.

Mittels eines derartigen durch das erfindungsgemäße System ermöglichten automatisierten Anlernens des Haltepunktes reduzieren sich des Weiteren dynamische Tests bei Inbetriebnahmen. Die Erfindung bietet zudem Vorteile bei der Ortssynchronisation beziehungsweise bei der Wegerfassung für ein Fahrzeug, da zum Beispiel ein sich über die Zeit reduzierender Raddurchmesser des Fahrzeugs aufgrund einer veränderten Haltepunktgenauigkeit erkannt und automatisch durch Anpassung der Bremskurve für das Fahrzeug ausgeglichen werden kann.

Gemäß einer vorteilhaften Ausgestaltung des erfindungsgemäßen Systems ist vorgesehen, dass die wenigstens eine an dem Fahrzeug angeordnete Sensoreinheit zwei Sensoren zur Abstandsmessung umfasst. Derartige für eine Abstandsmessung vorgesehene Sensoren sind in der Lage, Objekte aus unterschiedlichen Materialien wie Metall, Holz oder Kunststoff zu erfassen. Zudem beeinträchtigen Umwelteinflüsse wie Feuchte, Staub und Rauch ihre Messgenauigkeit nicht. Des Weiteren führen auch Niederschläge wie Regen oder Schnee in normaler Dichte zu keiner Funktionsbeeinträchtigung der Sensoren, so dass auch ein Einsatz an oberirdisch gelegenen Haltepunkten möglich ist. Weiterhin ist optional durch konstruktive Maßnahmen ein vor Umwelteinflüssen geschützter Einbau möglich.

Vorteilhafterweise ist weiter eine Anordnung der wenigstens einen Sensoreinheit unterhalb einer Tür des Fahrzeugs vorgesehen. Dadurch wird es insbesondere bei Haltepunkten, welche einen ebenerdigen Ein- und Ausstieg aufweisen, ermöglicht, die unterhalb der Tür angeordnete Sensoreinheit auf gleicher Höhe mit dem am Bahnsteig des Haltepunktes befestigten, korrespondierenden Abstandsprofil anzuordnen.

Erfindungsgemäß ist eine Anordnung der wenigstens einen Sensoreinheit an der Unterseite des Fahrzeugs und eine Anordnung des wenigstens einen Abstandsprofils im Gleis vorgesehen. Dadurch wird eine Redundanz und eine aus dieser resultierende erhöhte Sicherheit bei der Erfassung der Haltepunktgenauigkeit eines Fahrzeugs erzielt. Vorteilhafterweise kann zudem vorgesehen sein, dass eine Validierung der von mehreren Sensoreinheiten erfassten Messergebnisse mittels einer Plausibilitätsprüfung erfolgt. Dadurch können defekte Sensoreinheiten erkannt werden.

Besonders bevorzugt sind wenigstens zwei Sensoren zur Abstandsmessung sowie eine damit verbundene Auswerteeinheit am Fahrzeug vorgesehen. Dadurch wird erreicht, dass nicht nur eine Erfassung durchgeführt wird, ob das Fahrzeug am Haltepunkt zum Stehen gekommen ist oder den Haltepunkt verfehlt hat, sondern eine Ermittlung ermöglicht, inwieweit Abweichungen zum optimalen Haltepunkt gegeben sind.

Vorteilhafterweise sind ferner je Seite des Fahrzeugs wenigstens zwei Auswerteeinheiten sowie damit verbundene Sensoreinheiten vorgesehen. Dadurch wird erfindungsgemäß eine signaltechnisch sichere Realisierung ermöglicht, welche eine Funktion des Systems auch bei einem Defekt einer der Auswerteeinheiten oder einer der Sensoreinheiten gewährleistet.

Gemäß einer bevorzugten Ausgestaltung des erfindungsgemäßen Systems sind eine Auswerteeinheit sowie eine damit verbundene Sensoreinheit sowohl an der ersten Tür als auch an der letzten Tür je Seite des Fahrzeugs vorgesehen. Damit wird eine Plausibilitätsprüfung dahingehend möglich, ob das Fahrzeug vollständig, also über seine gesamte Länge, am Bahnsteig eines Haltepunktes steht. Weiterhin wird eine Plausibilitätsprüfung dahingehend möglich, auf welcher Seite sich der Bahnsteig befindet und ob somit die Türen zum Öffnen freigegeben werden dürfen.

In einer weiteren bevorzugten Variante der Erfindung ist die wenigstens eine Auswerteeinheit in einem Zugsicherungsrechner des Fahrzeugs integriert. Dies hat den Vorteil, dass der Zugsicherungsrechner, beispielsweise ein Automatic Train Protection (ATP)-Gerät, eine Kommunikationsschnittstelle zu einer Einrichtung für die Zugsteuerung, beispielsweise ein Automatic Train Operation (ATO)-Gerät, aufweist und so die Möglichkeit besteht, die bezüglich der Haltepunktgenauigkeit notwendigen Korrekturwerte für die Bremskurve direkt vom Zugsicherungsrechner an die Zugsteuerung zu übergeben.

Die wenigstens eine Auswerteeinheit des erfindungsgemäßen Systems weist vorteilhafterweise Mittel zur automatisierten Korrektur der Bremskurve des Fahrzeugs auf. Die Mittel können dabei als Mikroprozessor, beispielsweise im Rahmen einer integrierten Schaltung, vorliegen. Dadurch wird es ermöglicht, dass nicht nur eine Erfassung der Haltepunktgenauigkeit durchgeführt wird, sondern dass auch eine Optimierung diesbezüglich umgesetzt werden kann, indem die Bremskurve für das Fahrzeug unter Berücksichtigung der ermittelten Haltepunktgenauigkeit modifiziert wird.

Vorteilhafterweise weist die wenigstens eine Auswerteeinheit ferner Mittel zur Übermittlung der Werte hinsichtlich der automatisierten Korrektur der Bremskurve des Fahrzeugs an eine Steuereinrichtung des Fahrzeugs auf. Die Mittel können dabei als drahtlose oder drahtgebundene Kommunikationsschnittstelle ausgebildet sein. Dies ist insbesondere für den Fall vorteilhaft, dass die Auswerteeinheit nicht im Zugsicherungsrechner integriert ist, da auf diese Weise dennoch eine automatisierte Optimierung der Bremskurve des Fahrzeugs durchgeführt werden kann.

Gemäß einer weiteren bevorzugten Ausgestaltung der Erfindung weist das wenigstens eine Abstandsprofil die Form eines Rechtecks, eines Dreiecks oder eines Trapezes auf. Bei einem Abstandsprofil mit der Form eines Rechtecks wird eine Erfassung dahingehend ermöglicht, ob das Fahrzeug am Haltepunkt unter Berücksichtigung der zulässigen Abweichungen zum Stehen gekommen ist oder ob es den Haltepunkt verfehlt hat. Bei einem Abstandsprofil mit der Form eines Dreiecks wird es weiter ermöglicht, dass auch die Abweichungen zum optimalen Haltepunkt erfasst werden können. Ein Abstandsprofil mit der Form eines Trapezes ermöglicht es ferner, dass bei einem ausreichend genauen Haltepunkt des Fahrzeuges keine permanenten Korrekturen der Fahrzeugposition durchgeführt werden müssen. Vorzugsweise besteht das wenigstens eine Abstandsprofil aus einem insbesondere gebogenen Blech, einem Kunststoffkörper oder einem Beton-Formteil. Abstandsprofile aus derartigen Materialien sind einfach zu fertigen und sind dennoch für eine Abstandsmessung mittels der Sensoreinheit, insbesondere mittels einer zwei Ultraschallsensoren umfassenden Sensoreinheit, geeignet.

In einer weiter bevorzugten Ausführung ist das wenigstens eine Abstandsprofil an seinen schräg verlaufenden Flächen gestuft ausgeführt. Diese Ausführung bietet Vorteile bei der Abstandsmessung durch die wenigstens eine Sensoreinheit, da mitunter Sensoren zur Abstandsmessung zum Einsatz kommen, welche glatte schräg stehende Flächen schlecht erfassen können.

Ferner wird erfindungsgemäß ein Fahrzeug gemäß Anspruch 14 und ein Verfahren gemäß Anspruch 15 zur Verfügung gestellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine aus dem Stand der Technik bekannte Vorrichtung zur Erfassung der Haltepunktgenauigkeit eines Fahrzeugs,
- Figur 2: ein in einer Seitenansicht dargestelltes Fahrzeug entsprechend dem erfindungsgemäßen System,
- Figur 3: ein in einer Unteransicht dargestelltes Fahrzeug entsprechend dem erfindungsgemäßen System,
- Figur 4: einen Haltepunkt entsprechend dem erfindungsgemäßen System,
- Figur 5: ein erstes Ausführungsbeispiel für eine Abstandsmessung mittels eines ersten und eines zweiten Sensors und einem Abstandsprofil in rechteckiger Form,
- Figur 6: ein zweites Ausführungsbeispiel für eine Abstandsmessung mittels eines ersten und eines zweiten Sensors und einem Abstandsprofil in rechteckiger Form,
- Figur 7: ein drittes Ausführungsbeispiel für eine Abstandsmessung mittels eines ersten und eines zweiten Sensors und einem Abstandsprofil in rechteckiger Form,
- Figur 8: ein erstes Ausführungsbeispiel für eine Abstandsmessung mittels eines ersten und eines zweiten Sensors und einem Abstandsprofil in dreieckiger Form,
- Figur 9: ein zweites Ausführungsbeispiel für eine Abstandsmessung mittels eines ersten und eines zweiten Sensors und einem Abstandsprofil in dreieckiger Form,
- Figur 10: ein drittes Ausführungsbeispiel für eine Abstandsmessung mittels eines ersten und eines zweiten Sensors und einem Abstandsprofil in dreieckiger Form,
- Figur 11: ein erstes Ausführungsbeispiel für eine Abstandsmessung mittels eines ersten und eines zweiten Sensors und einem Abstandsprofil in Trapezform,
- Figur 12: ein zweites Ausführungsbeispiel für eine Abstandsmessung mittels eines ersten und eines zweiten Sensors und einem Abstandsprofil in Trapezform,
- Figur 13: ein drittes Ausführungsbeispiel für eine Abstandsmessung mittels eines ersten und eines zweiten Sensors und einem Abstandsprofil in Trapezform,
- Figur 14: ein viertes Ausführungsbeispiel für eine Abstandsmessung mittels eines ersten und eines zweiten Sensors und einem Abstandsprofil in Trapezform,
- Figur 15: ein fünftes Ausführungsbeispiel für eine Abstandsmessung mittels eines ersten und eines zweiten Sensors und einem Abstandsprofil in Trapezform,
- Figur 16: ein erstes Ausführungsbeispiel eines Abstandsprofils in Trapezform,
- Figur 17: ein zweites Ausführungsbeispiel eines Abstandsprofils in Trapezform.

Im Folgenden wird die erfindungsgemäße Vorrichtung zur Erfassung der Haltepunktgenauigkeit eines Fahrzeugs 1 erläutert werden. Das erfindungsgemäße Fahrzeug 1 ist dabei, wie beispielhaft in den Figuren gezeigt, bevorzugt aber nicht beschränkend, ein schienengebundenes Fahrzeug 1, welches sich auf einem Schienen 20 umfassenden Gleis 19 fortbewegt.

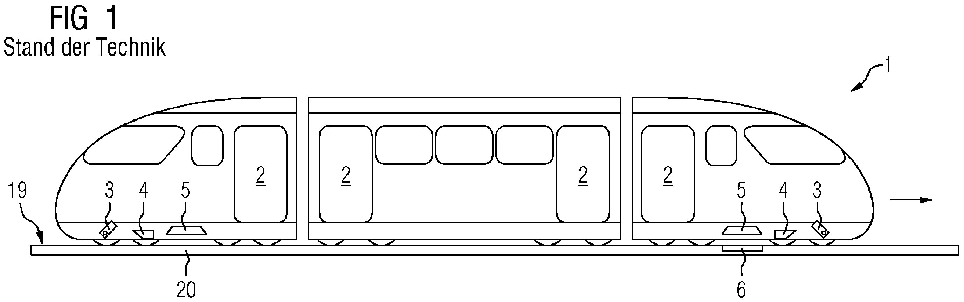

In der Figur 1 ist eine aus dem Stand der Technik bekannte Vorrichtung zur Erfassung der Haltepunktgenauigkeit eines Fahrzeugs 1 gezeigt, bei welcher an einem Fahrzeug 1 zwei Wegimpulsgeber 3, zwei Radargeräte 4 sowie zwei Balisenantennen 5 vorgesehen sind. Das Fahrzeug 1 ist vorzugsweise ein schienengebundenes Fahrzeug 1, welches sich auf Schienen 20 fortbewegt, die Bestandteil eines Gleises 19 sind. Dabei wird mit dem punktförmigen Balisen-Übertragungskanal, welcher zwischen der Balisenantenne 5 des Fahrzeugs 1 und der streckenseitigen, vorzugsweise im Gleis 19 angeordneten, Festdaten-Balise 6 gebildet wird, eine Ortssynchronisation realisiert. Ferner wird mittels der Wegimpulsgeber 3 die zurückgelegte Wegstrecke über den bekannten Radumfang berechnet. Über einen Bremseingriff wird das Fahrzeug 1 bis zum Haltepunkt zum Stehen gebracht. Für die Berechnung der Haltepunktgenauigkeit spielen die möglichen Abweichungen der Balisenmittenerkennung für die Ortssynchronisation, eine fehlerhafte Wegstrecke durch ein mögliches Gleiten der Räder beim Bremsvorgang und Ungenauigkeiten beim Radumfang eine wichtige Rolle. Sicherungstechnisch lassen sich daher bisher nur Haltegenauigkeiten bis circa 1 m realisieren. Eine Erfassung der im Betrieb erreichten absoluten Haltepunktgenauigkeiten beziehungsweise die im Rahmen dieser auftretenden Abweichungen erfolgt zudem nicht. Des Weiteren ist auch keine Optimierung auf den Haltepunkt durch automatisierte Korrektur der Bremskurve des Fahrzeugs möglich. Selbst bei Nutzung von zusätzlichen Radar-Sensoren für die Berechnung der Wegstrecke sind Sensorschwächen der Radar-Sensoren zu berücksichtigen, weshalb auch dabei kein zufriedenstellendes Resultat hinsichtlich der Haltepunktgenauigkeit erzielbar ist.

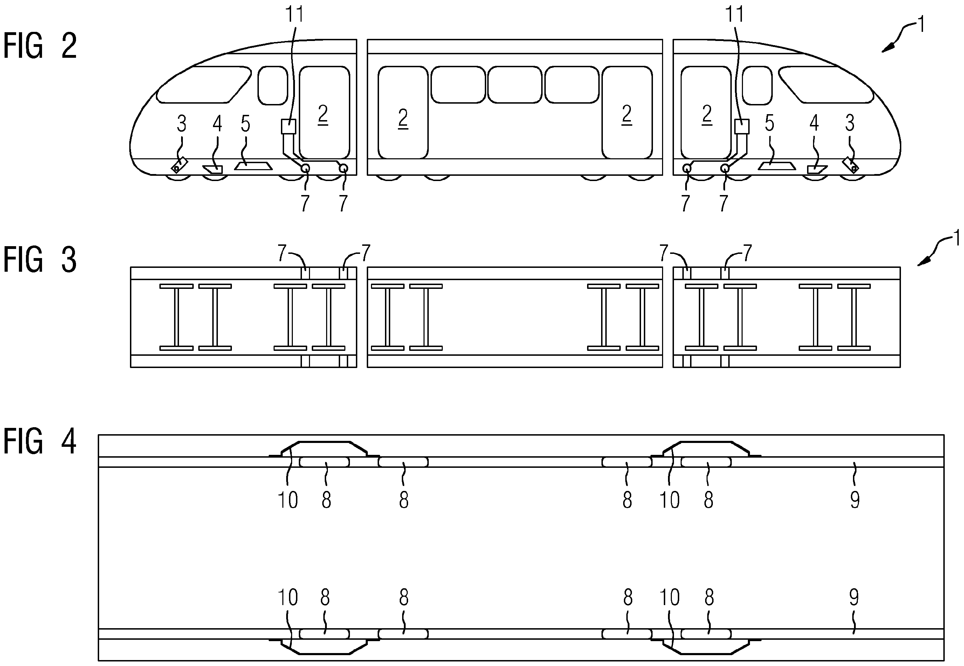

Figur 2 zeigt ein in einer Seitenansicht dargestelltes schienengebundenes Fahrzeug 1, mit welchem ein Schienen 20 umfassendes Gleis 19 befahrbar ist, entsprechend dem erfindungsgemäßen System, umfassend jeweils eine unterhalb der beiden äu-ßeren Türen 2 angeordnete Sensoreinheit 7, welche jeweils mit einer Auswerteeinheit 11 verbunden ist. Die für die Erfassung der absoluten Haltepunktgenauigkeit am Fahrzeug 1 angebrachten Sensoreinheiten 7 sind zur Abstandsmessung erforderlich und können beispielsweise Ultraschallsensoren umfassen. Zwei Balisen 5, zwei Wegimpulsgeber 3 und zwei Radargeräte 4 können vorliegend für eine Grob-Ortung des Fahrzeugs 1 und die eigentlichen Funktionen der Zugsicherung erhalten bleiben.

In Figur 3 ist das schienengebundene Fahrzeug 1 in einer Unteransicht dargestellt, wodurch erkennbar wird, dass die Sensoreinheiten 7 auf beiden Seiten des Fahrzeugs 1 jeweils im Bereich der beiden äußeren Türen angeordnet sind.

Figur 4 zeigt ferner einen entsprechend der vorliegenden Erfindung ausgestatteten Haltepunkt, welcher einen Bahnsteig umfasst, der auf Bahnsteigseite unterhalb der Plattformtüren und auf gleicher Höhe der Sensoreinheiten 7 des Fahrzeugs 1 Abstandsprofile 10 aufweist. Die Abstandsprofile sind dabei derart angeordnet, dass sie von den an den beiden äußeren Türen 2 des Fahrzeugs 1 angeordneten Sensoreinheiten 7 erfassbar sind. Ferner sind in Figur 4 acht Türen 8 am Haltepunkt zu erkennen, welche in eine Umgebungswand 9, die bevorzugt aus Glas ist, am Haltepunkt integriert sind und durch welche Fahrgästen der Einstieg in das Fahrzeug 1 ermöglicht wird. Jeweils zwei der Sensoreinheiten 7, welche einer Tür 2 zugeordnet sind, liefern einer Auswerteeinheit 11 zwei unabhängige Analogwerte, beispielsweise Spannungs- und/oder Stromwert, zur Auswertung und zur Ermittlung des Abstands a1, a2 zwischen einer Sensoreinheit und einem Abstandsprofil 10. Die Höhe des Ausgangswertes ist dabei proportional zum Abstand a1, a2. Vorliegend sind je Seite des Fahrzeugs 1 zwei Auswerteeinheiten 11 für eine signaltechnisch sichere Realisierung erforderlich.

Nachfolgend werden das Abstandsprofil 10 und die beiden Sensoren 12, 13, welche die Erfassung der im Betrieb erreichten absoluten Haltepunktgenauigkeit und die Optimierung auf den Haltepunkt ermöglichen, beschrieben.

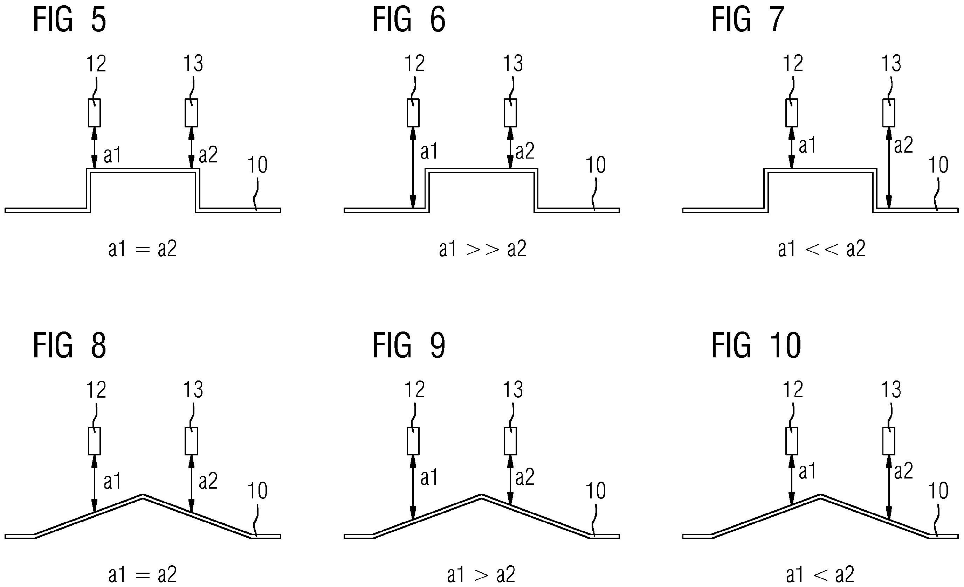

Figur 5 zeigt ein erstes Ausführungsbeispiel für eine Abstandsmessung mittels eines ersten und eines zweiten Sensors 12, 13 und einem Abstandsprofil 10 in rechteckiger Form. Die Form eines Rechtecks für das Abstandsprofil 10 ermöglicht lediglich die Erfassung, ob das Fahrzeug 1 am Haltepunkt zum Stehen gekommen ist oder ob es den Haltepunkt verfehlt hat. In Figur 5 ist erkennbar, dass beide Sensoren 12, 13 den hervorstehenden Bereich des Abstandsprofils 10 erfassen. Daraus resultiert, dass das Fahrzeug 1 derart am Haltepunkt zum Stillstand gekommen ist, dass das im Bereich einer Tür 8 am Haltepunkt angeordnete Abstandsprofil 10 den beiden im Bereich der Tür 2 des Fahrzeugs 1 angeordneten Sensoren 12, 13 gegenüberliegt, woraus zwei gleich große Abstände a1, a2 zwischen dem hervorstehenden Bereich des Abstandsprofils 10 und den Sensoren 12, 13 resultieren. Der Haltepunkt wurde demnach optimal getroffen.

Figur 6 zeigt ein zweites Ausführungsbeispiel für eine Abstandsmessung mittels eines ersten und eines zweiten Sensors 12, 13 und einem Abstandsprofil 10 in rechteckiger Form, bei welchem das Fahrzeug 1 den Haltepunkt zu früh erreicht hat, also zu früh zum Stillstand gekommen ist. Der erste Sensor 12 weist im Vergleich zum zweiten Sensor 13 einen größeren Abstand a1 zum Abstandsprofil 10 auf. Lediglich der Abstand a2 von dem zweiten Sensor 13 zum Abstandsprofil 10 weist den gewünschten Wert auf.

Figur 7 zeigt ein drittes Ausführungsbeispiel für eine Abstandsmessung mittels eines ersten und eines zweiten Sensors 12, 13 und einem Abstandsprofil 10 in rechteckiger Form, bei welchem das Fahrzeug 1 den Haltepunkt zu spät erreicht hat, also zu spät zum Stillstand gekommen ist. Hier weist der zweite Sensor 13 im Vergleich zum ersten Sensor 12 einen größeren Abstand a2 zum Abstandsprofil 10 auf. Der Abstand a1 von dem ersten Sensor 12 zum Abstandsprofil 10 weist hingegen den gewünschten Wert auf.

Figur 8 zeigt ein erstes Ausführungsbeispiel für eine Abstandsmessung mittels eines ersten und eines zweiten Sensors 12, 13 und einem Abstandsprofil 10 in dreieckiger Form. Durch die dreieckige Form wird auch die Erfassung von Abweichungen zum optimalen Haltepunkt ermöglicht. Bei dem in Figur 8 dargestellten Ausführungsbeispiel wurde der Haltepunkt vom Fahrzeug 1 optimal getroffen, das heißt das Fahrzeug 1 ist weder zu früh noch zu spät zum Stillstand gekommen. Ein derartiger Fall, bei welchem der Abstand zwischen dem ersten Sensor und dem Abstandsprofil 10 sowie dem zweiten Sensor und dem Abstandsprofil 10 mit a1=a2 exakt übereinstimmt, wird in der Realität nicht auftreten, da kleine Differenzen zwischen a1 und a2 nicht auszuschließen sind.

Figur 9 zeigt ein zweites Ausführungsbeispiel für eine Abstandsmessung mittels eines ersten und eines zweiten Sensors 12, 13 und einem Abstandsprofil 10 in dreieckiger Form, bei welchem der Haltepunkt zu früh erreicht wurde, das Fahrzeug also zu früh zum Stillstand gekommen ist. Der Abstand a1 des ersten Sensors 12 zum Abstandsprofil 10 ist größer als der Abstand a2 des zweiten Sensors 13 zum Abstandsprofil 10. Vorliegend sollte eine Korrektur der Bremskurve des Fahrzeugs 1 durchgeführt werden, indem die Bremskurve dahingehend modifiziert wird, dass das Fahrzeug 1 später und/oder schwächer bremst und dadurch weiter fährt, so dass eine Position erreicht wird, in welcher die beiden Abstände a1 und a2 der Sensoren 12, 13 vom Abstandsprofil 10 nahezu übereinstimmen.

Figur 10 zeigt ein drittes Ausführungsbeispiel für eine Abstandsmessung mittels eines ersten und eines zweiten Sensors 12, 13 und einem Abstandsprofil 10 in dreieckiger Form, bei welchem der Haltepunkt zu spät erreicht wurde, das Fahrzeug also zu spät zum Stillstand gekommen ist. Der Abstand a2 des zweiten Sensors 13 zum Abstandsprofil 10 ist größer als der Abstand a1 des ersten Sensors 12 zum Abstandsprofil 10. Vorliegend sollte eine Korrektur der Bremskurve des Fahrzeugs 1 durchgeführt werden, indem die Bremskurve dahingehend modifiziert wird, dass das Fahrzeug 1 früher und/oder stärker bremst und dadurch weniger weit fährt, so dass eine Position erreicht wird, in welcher die beiden Abstände a1 und a2 der Sensoren 12, 13 vom Abstandsprofil 10 nahezu übereinstimmen.

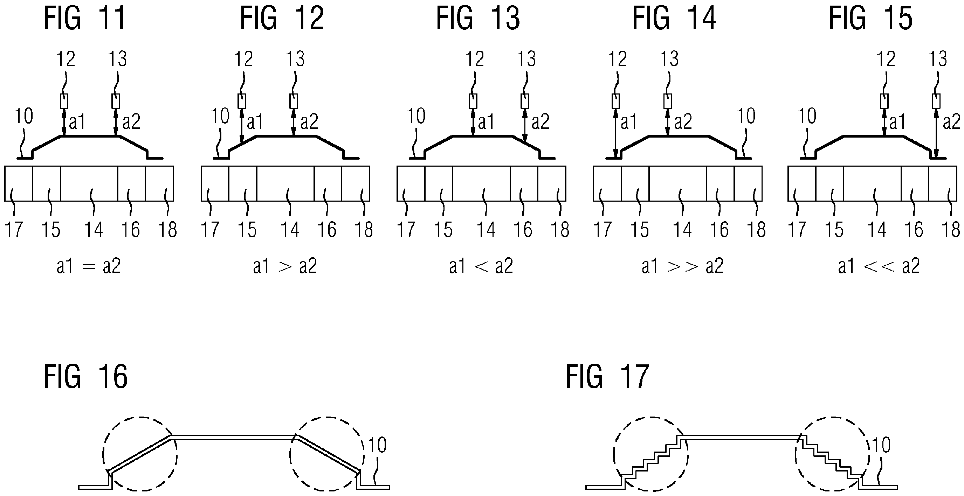

Figur 11 zeigt ein erstes Ausführungsbeispiel für eine Abstandsmessung mittels eines ersten und eines zweiten Sensors 12, 13 und einem Abstandsprofil 10 in Trapezform. Um zu verhindern, dass bei einem ausreichend genauen Haltepunkt nicht permanent Korrekturen der Bremskurve des Fahrzeugs 1 durchgeführt werden müssen, da die von den beiden Sensoren 12, 13 gemessenen Abstände a1, a2 nicht übereinstimmen, wird ein Abstandsprofil in Trapezform verwendet. Bei dieser Form werden den verschieden Abschnitten des Trapezes Wertebereiche 14, 15, 16, 17, 18 zugeordnet, welche eine Aussage über die Genauigkeit des Haltepunkts machen. In Figur 11 ermitteln beide Sensoren 12, 13 einen Messwert im Wertebereich 14, woraus resultiert, dass der Haltepunkt sehr genau eingehalten und keine Korrektur der Fahrzeug-Bremskurve erforderlich wird. Die Türen 2 des Fahrzeugs 1 und die Plattformtüren 8 können bei stehendem Fahrzeug geöffnet werden. Sofern daher beide Sensoren 12, 13 im Wertebereich 14 liegen, ist der Haltepunkt vom Fahrzeug 1 sehr genau erreicht worden, so dass die Türen 2 des Fahrzeugs 1 geöffnet werden dürfen und eine Korrektur beziehungsweise Kalibrierung der Bremskurve des Fahrzeugs 1 nicht erforderlich ist.

Figur 12 zeigt ein zweites Ausführungsbeispiel für eine Abstandsmessung mittels eines ersten und eines zweiten Sensors 12, 13 und einem Abstandsprofil 10 in Trapezform. Dabei liegt der erste Sensor 12 im Wertebereich 15 und der zweite Sensor im Wertebereich 14. Dies bedeutet, dass der Haltepunkt noch ausreichend genau ist, so dass eine Öffnung der Türen 2 des Fahrzeugs 1 bei Stillstand des Fahrzeugs 1 erfolgen darf. Jedoch sollte eine Korrektur beziehungsweise Kalibrierung der Bremskurve des Fahrzeugs 1 vorgenommen werden, damit das Fahrzeug 1 zukünftig später und/oder schwächer bremst und dadurch weiter fährt, so dass eine Position erreicht wird, in welcher beide Sensoren 12, 13 einen Messwert im Wertebereich 14 erzielen.

Figur 13 zeigt ein drittes Ausführungsbeispiel für eine Abstandsmessung mittels eines ersten und eines zweiten Sensors 12, 13 und einem Abstandsprofil 10 in Trapezform. Dabei liegt der zweite Sensor 13 im Wertebereich 16 und der erste Sensor im Wertebereich 14. Dies bedeutet, dass der Haltepunkt noch ausreichend genau ist, so dass eine Öffnung der Türen 2 des Fahrzeugs 1 bei Stillstand des Fahrzeugs 1 erfolgen darf. Jedoch sollte eine Korrektur beziehungsweise Kalibrierung der Bremskurve des Fahrzeugs 1 vorgenommen werden, damit das Fahrzeug 1 zukünftig früher und/oder stärker bremst und dadurch weniger weit fährt, so dass eine Position erreicht wird, in welcher beide Sensoren 12, 13 einen Messwert im Wertebereich 14 erzielen. Sofern daher einer der Sensoren 12, 13 im Wertebereich 15 oder 16 und der andere Sensor 12, 13 im Wertebereich 14 liegt, ist der Haltepunkt vom Fahrzeug 1 zwar noch ausreichend genau erreicht worden, aber eine Korrektur beziehungsweise Kalibrierung der Bremskurve des Fahrzeugs 1 ist vorzunehmen.

Figur 14 zeigt ein viertes Ausführungsbeispiel für eine Abstandsmessung mittels eines ersten und eines zweiten Sensors 12, 13 und einem Abstandsprofil 10 in Trapezform. In diesem Ausführungsbeispiel hat das Fahrzeug 1 den Haltepunkt viel zu früh erreicht, so dass der erste Sensor 12 im Wertebereich 17 und der zweite Sensor im Wertebereich 14 liegt. Der Haltepunkt ist vorliegend nicht mehr ausreichend genau erreicht worden, so dass das Fahrzeug in dieser Position die Türen 2 nicht öffnen darf. Das Fahrzeug muss seine Position daher derart verändern, dass wenigstens ein Sensor 12, 13 im Wertebereich 14 und der andere Sensor 12, 13 im Wertebereich 15 oder 16 liegt, damit die Türen 2 des Fahrzeugs 1 geöffnet werden dürfen. Zudem muss eine Korrektur beziehungsweise Kalibrierung der Bremskurve des Fahrzeugs 1 vorgenommen werden, damit das Fahrzeug 1 zukünftig später und/oder schwächer bremst und dadurch weiter fährt, so dass eine Position erreicht wird, in welcher der erste Sensor 12 kein Messwert im Wertebereich 17 zugeordnet wird.

Figur 15 zeigt ein fünftes Ausführungsbeispiel für eine Abstandsmessung mittels eines ersten und eines zweiten Sensors 12, 13 und einem Abstandsprofil 10 in Trapezform. In diesem Ausführungsbeispiel hat das Fahrzeug 1 den Haltepunkt viel zu spät erreicht, so dass der erste Sensor 12 im Wertebereich 14 und der zweite Sensor im Wertebereich 18 liegt. Der Haltepunkt ist vorliegend nicht mehr ausreichend genau erreicht worden, so dass das Fahrzeug 1 in dieser Position die Türen 2 nicht öffnen darf. Das Fahrzeug 1 muss seine Position daher derart verändern, dass wenigstens ein Sensor 12, 13 im Wertebereich 14 und der andere Sensor 12, 13 im Wertebereich 15 oder 16 liegt, damit die Türen 2 des Fahrzeugs 1 geöffnet werden dürfen. Zudem muss eine Korrektur beziehungsweise Kalibrierung der Bremskurve des Fahrzeugs 1 vorgenommen werden, damit das Fahrzeug 1 zukünftig früher und/oder stärker bremst und dadurch weniger weit fährt, so dass eine Position erreicht wird, in welcher der zweite Sensor 13 kein Messwert im Wertebereich 18 zugeordnet wird. Sofern daher wenigstens ein Sensor12, 13 im Wertebereich 17 oder 18 liegt, ist der Haltepunkt vom Fahrzeug 1 nicht mehr ausreichend genau erreicht worden, so dass die Türen 2 des Fahrzeugs 1 nicht geöffnet werden dürfen und zudem eine Korrektur beziehungsweise Kalibrierung der Bremskurve des Fahrzeugs 1 erforderlich ist.

Figur 16 zeigt ein erstes Ausführungsbeispiel eines Abstandsprofils 10 in Trapezform, bei welchem die steigende und die fallende Flanke des als Trapez ausgebildeten Abstandsprofils 10 einen geraden Verlauf aufweisen. Ein derartiger Verlauf hat den Vorteil, dass das Abstandsprofil 10 einfach zu fertigen ist. Der gerade Verlauf könnte jedoch mitunter dazu führen, dass der Sensor der für die Erfassung des Abstandes vorgesehen Sensoreinheit eine Erfassung aufgrund der glatten Oberfläche nicht fehlerfrei durchführen kann.

Figur 17 zeigt ein zweites Ausführungsbeispiel eines Abstandsprofils 10 in Trapezform, bei welchem die steigende und die fallende Flanke des als Trapez ausgebildeten Abstandsprofils 10 einen stufenförmigen Verlauf aufweisen. Ein derartiger Verlauf hat den Vorteil, dass auch kostengünstigere Sensoren der Sensoreinheit, welche mitunter Probleme mit der Erfassung von glatten schräg stehenden Flächen haben, eingesetzt werden können.

Durch das erfindungsgemäße System wird demnach eine Auswertung durch mittels Abstandsmessung von Sensoren 12, 13 erfassten analogen Messwerten durchgeführt, wodurch eine signaltechnisch sichere Erfassung der im Betrieb erreichten absoluten Haltepunktgenauigkeit und eine Optimierung der Haltepunktgenauigkeit durch automatisierte Korrektur der Bremskurve ermöglicht wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, der durch die Ansprüche definiert wird, zu verlassen.

## Patentansprüche

1. Vorrichtung zur Erfassung und Optimierung der Haltepunktgenauigkeit eines Fahrzeugs (1), umfassend
- wenigstens eine an dem Fahrzeug (1) anordenbare Sensoreinheit (7),
- wenigstens eine mit der wenigstens einen Sensoreinheit (7) verbundene Auswerteeinheit (11),
wobei die wenigstens eine Sensoreinheit (7) zur Messung eines Abstands zu einem an einem von dem Fahrzeug (1) befahrenen Haltepunkt angeordneten Abstandsprofil (10) und zur Übermittlung des Messergebnisses an die wenigstens eine mit der Sensoreinheit (7) verbundene Auswerteeinheit (11) ausgebildet ist,
wobei das Fahrzeug (1) ein schienengebundenes Fahrzeug (1) ist und eine Anordnung der wenigstens einen Sensoreinheit (7) an der Unterseite des Fahrzeugs (1) anordenbar ist und eine Anordnung des wenigstens einen Abstandsprofils (10)
- an einer vom Fahrzeug (1) befahrenen Schiene (20) oder im die Schiene (20) umgebenden Gleis (19) anordenbar ist, und dabei der vertikale Abstand zwischen Sensoreinheit (7) und Abstandsprofil (10) gemessen wird, oder
- an einer sich am Haltepunkt befindlichen, das Fahrzeug (1) umgebenden Umgebungswand (9) anordenbar ist und dabei der horizontale Abstand zwischen Sensoreinheit (7) und Abstandsprofil (10) gemessen wird.

2. System zur Erfassung und Optimierung der Haltepunktgenauigkeit eines Fahrzeugs (1), umfassend
- wenigstens eine an dem Fahrzeug (1) angeordnete Sensoreinheit (7),
- wenigstens ein an einem von dem Fahrzeug (1) befahrenen Haltepunkt angeordnetes Abstandsprofil (10),
- wenigstens eine mit der wenigstens einen Sensoreinheit (7) verbundene Auswerteeinheit (11),
wobei die wenigstens eine Sensoreinheit (7) zur Messung des Abstands zu dem wenigstens einen Abstandsprofil (10) und zur Übermittlung des Messergebnisses an die wenigstens eine mit der Sensoreinheit (7) verbundene Auswerteeinheit (11) ausgebildet ist,
wobei das Fahrzeug (1) ein schienengebundenes Fahrzeug (1) ist und eine Anordnung der wenigstens einen Sensoreinheit (7) an der Unterseite des Fahrzeugs (1) und eine Anordnung des wenigstens einen Abstandsprofils (10)
- an einer vom Fahrzeug (1) befahrenen Schiene (20), oder im die Schiene (20) umgebenden Gleis (19) vorgesehen ist, und dabei der vertikale Abstand zwischen Sensoreinheit (7) und Abstandsprofil (10) gemessen wird, oder
- an einer sich am Haltepunkt befindlichen, das Fahrzeug (1) umgebenden Umgebungswand (9) vorgesehen ist und dabei der horizontale Abstand zwischen Sensoreinheit (7) und Abstandsprofil (10) gemessen wird.

3. System nach Anspruch 2, wobei die wenigstens eine an dem Fahrzeug (1) angeordnete Sensoreinheit (7) wenigstens zwei Sensoren zur Abstandsmessung umfasst.

4. System nach Anspruch 2 oder Anspruch 3, wobei eine Anordnung der wenigstens einen Sensoreinheit (7) unterhalb einer Tür (2) des Fahrzeugs (1) vorgesehen ist.

5. System nach einem der Ansprüche 2 bis 3, wobei wenigstens zwei seitenselektiv angeordnete Auswerteeinheiten (11) sowie damit verbundene Sensoreinheiten (7) am Fahrzeug (1) vorgesehen sind.

6. System nach Anspruch 5, wobei je Seite des Fahrzeugs (1) wenigstens zwei Auswerteeinheiten (11) sowie damit verbundene Sensoreinheiten (7) vorgesehen sind.

7. System nach einem der Ansprüche 2 bis 6, wobei eine Auswerteeinheit (11) sowie eine damit verbundene Sensoreinheit (7) sowohl an der ersten Tür (2) als auch an der letzten Tür (2) je Seite des Fahrzeugs (1) vorgesehen sind.

8. System nach einem der Ansprüche 2 bis 7, wobei das Fahrzeug (1) ein Zug ist und die wenigstens eine Auswerteeinheit (11) in einem Zugsicherungsrechner des Fahrzeugs (1) integriert ist.

9. System nach einem der Ansprüche 2 bis 8, wobei die wenigstens eine Auswerteeinheit (11) Mittel zur automatisierten Korrektur der Bremskurve des Fahrzeugs (1) aufweist.

10. System nach Anspruch 9, wobei die wenigstens eine Auswerteeinheit (11) ferner Mittel zur Übermittlung der Werte hinsichtlich der automatisierten Korrektur der Bremskurve des Fahrzeugs (1) an eine Steuereinrichtung des Fahrzeugs (1) aufweist.

11. System nach einem der Ansprüche 2 bis 10, wobei das wenigstens eine Abstandsprofil (10) die Form eines Rechtecks, eines Dreiecks oder eines Trapezes aufweist.

12. System nach einem der Ansprüche 2 bis 11, wobei das wenigstens eine Abstandsprofil (10) aus einem vorzugsweise gebogenen Blech, einem Kunststoffkörper oder einem Beton-Formteil besteht.

13. System nach einem der Ansprüche 2 bis 12, wobei das wenigstens eine Abstandsprofil (10) an seinen schräg verlaufenden Flächen gestuft ausgeführt ist.

14. Fahrzeug, insbesondere Schienenfahrzeug, mit einer Vorrichtung nach Anspruch 1.

15. Verfahren zur Erfassung und Optimierung der Haltepunktgenauigkeit eines Fahrzeugs (1), wobei das Fahrzeug (1) ein schienengebundenes Fahrzeug (1) ist,
bei dem wenigstens eine Sensoreinheit (7) an der Unterseite des Fahrzeugs (1) angeordnet wird,
bei dem ein Abstand zu einem an einem von dem Fahrzeug (1) befahrenen Haltepunkt angeordneten Abstandsprofil (10) gemessen wird und das Messergebnisses von einer Sensoreinheit (7) an wenigstens eine verbundene Auswerteeinheit (11) übermittelt wird, und
bei dem das wenigstens eine Abstandsprofils (10)
- an einer vom Fahrzeug (1) befahrenen Schiene (20) oder im die Schiene (20) umgebenden Gleis (19) angeordnet wird, und der vertikale Abstand zwischen Sensoreinheit (7) und Abstandsprofil (10) gemessen wird, oder
- an einer sich am Haltepunkt befindlichen, das Fahrzeug (1) umgebenden Umgebungswand (9) angeordnet wird und der horizontale Abstand zwischen Sensoreinheit (7) und Abstandsprofil (10) gemessen wird.

## Claims

1. Apparatus for detecting and optimizing the stopping point accuracy of a vehicle (1), comprising
- at least one sensor unit (7) that may be arranged on the vehicle (1),
- at least one evaluating unit (11) that is connected to the at least one sensor unit (7),
wherein the at least one sensor unit (7) is embodied so as to measure a gap with respect to a gap profile (10) that is arranged on a stopping point that the vehicle (1) travels to and so as to transmit the measurement result to the at least one evaluating unit (11) that is connected to the sensor unit (7),
wherein the vehicle (1) is a rail-bound vehicle (1) and an arrangement of the at least one sensor unit (7) that may be arranged on the underside of the vehicle (1) and an arrangement of the at least one gap profile (10)
- can be arranged on a rail (20) that is traveled on by the vehicle (1) or in the track (19) that surrounds the rail (20), and in this case the vertical gap between sensor unit (7) and gap profile (10) is measured, or
- can be arranged on a surrounding wall (9) that surrounds the vehicle (1) and is located at the stopping point and in this case the horizontal gap between sensor unit (7) and gap profile (10) is measured.

2. System for ascertaining and optimizing the stopping point accuracy of a vehicle (1), comprising
- at least one sensor unit (7) that is arranged on the vehicle (1),
- at least one gap profile (10) that is arranged on a stopping point that the vehicle (1) travels to,
- at least one evaluating unit (11) that is connected to the at least one sensor unit (7),
wherein the at least one sensor unit (7) is embodied so as to measure the gap with respect to the at least one gap profile (10) and so as to transmit the measurement result to the at least one evaluating unit (11) that is connected to the sensor unit (7),
wherein the vehicle (1) is a rail-bound vehicle (1) and an arrangement of the at least one sensor unit (7) on the underside of the vehicle (1) and an arrangement of the at least one gap profile (10)
- is provided on a rail (20) that is traveled on by the vehicle (1) or in the track (19) that surrounds the rail (20), and in this case the vertical gap between sensor unit (7) and gap profile (10) is measured, or
- are provided on a surrounding wall (9) that surrounds the vehicle (1) and is located at the stopping point and in this case the horizontal gap between sensor unit (7) and gap profile (10) is measured.

3. System according to claim 2, wherein the at least one sensor unit (7) that is arranged on the vehicle (1) comprises at least two sensors for the gap measurement.

4. System according to claim 2 or claim 3, wherein an arrangement of the at least one sensor unit (7) is provided below a door (2) of the vehicle (1).

5. System according to claim 2 to 3, wherein at least two evaluating units (11) that are arranged on selected sides and also sensor units (7) that are connected to said evaluating units (11) are provided on the vehicle (1).

6. System according to claim 5, wherein each side of the vehicle (1) is provided with at least two evaluating units (11) and also sensor units (7) that are connected to said evaluating units.

7. System according to one of claims 2 to 6, wherein an evaluating unit (11) and also a sensor unit (7) that is connected to said evaluating unit (11) are provided both on the first door (2) as well as on the last door (2) on each side of the vehicle (1).

8. System according to one of claims 2 to 7, wherein the vehicle (1) is a train and the at least one evaluating unit (11) is integrated into a train safety computer of the vehicle (1) .

9. System according to one of claims 2 to 8, wherein the at least one evaluating unit (11) has means for the automated correction of the braking curve of the vehicle (1).

10. System according to claim 9, wherein the at least one evaluating unit (11) moreover comprises means for transmitting the values with regard to the automated correction of the braking curve of the vehicle (1) to a control facility of the vehicle (1).

11. System according to one of claims 2 to 10, wherein the at least one gap profile (10) has the shape of a rectangle, a triangle or a trapezoid.

12. System according to one of claims 2 to 11, wherein the at least one gap profile (10) is embodied from a preferably curved sheet metal, a synthetic material body or a concrete molded part.

13. System according to one of claims 2 to 12, wherein the at least one gap profile (10) is embodied in a stepped manner on its surfaces that extend obliquely.

14. Vehicle, in particular rail vehicle, having an apparatus according to claim 1.

15. Method for detecting and optimizing the stopping point accuracy of a vehicle (1), wherein the vehicle (1) is a rail-bound vehicle (1),
with which at least one sensor unit (7) is arranged on the underside of the vehicle (1),
in which a gap with respect to a gap profile (10) that is arranged on a stopping point that the vehicle (1) travels to is measured and the measurement result is transmitted from a sensor unit (7) to at least one evaluating unit (11) that is connected to the sensor unit (7), and
in which the at least one gap profile (10)
- is arranged on a rail (20) traveled on by the vehicle (1) or track (19) surrounding the rail (20), and the vertical distance between the sensor unit (7) and gap profile (10) is measured, or
- is arranged on a surrounding wall (9) located at the stopping point and surrounding the vehicle (1) and the horizontal gap is measured between the sensor unit (7) and the gap profile (10).

## Revendications

1. Dispositif de détection et d'optimisation de la précision du point d'arrêt d'un véhicule (1), comprenant
- au moins une unité (7) à capteur pouvant être montée sur le véhicule (1),
- au moins une unité (11) d'analyse reliée à la au moins une unité (7) à capteur,
dans lequel la au moins une unité (7) à capteur est constituée pour la mesure d'une distance à un profilé (10) d'écartement disposé à un point d'arrêt emprunté par le véhicule (1) et pour la transmission du résultat de la mesure à la au moins une unité (11) d'analyse reliée à l'unité (7) à capteur,
dans lequel le véhicule (1) est un véhicule (1) guidé sur rail et un montage de la au moins une unité (7) à capteur peut être monté sur le côté inférieur du véhicule (1), et un montage du au moins un profilé (10) d'écartement
- peut être monté sur un rail (20) emprunté par le véhicule (1) ou dans la voie (19) entourant le rail (20), et on mesure alors la distance verticale entre l'unité (7) à capteur et le profilé (10) d'écartement,
- ou peut être monté sur une paroi (9) d'environnement, se trouvant au point d'arrêt et entourant le véhicule (1), et on mesure alors la distance horizontale entre l'unité (7) à capteur et le profilé (10) d'écartement.

2. Système de détection et d'optimisation de la précision du point d'arrêt d'un véhicule (1), comprenant
- au moins une unité (7) à capteur montée sur le véhicule (1),
- au moins un profilé (10) d'écartement monté à un point d'arrêt emprunté par le véhicule (1),
- au moins une unité (11) d'analyse reliée à la au moins une unité (7) à capteur,
dans lequel la au moins une unité (7) à capteur est constituée pour la mesure de la distance au au moins un profilé (10) d'écartement, et pour la transmission du résultat de la mesure à la au moins une unité (11) d'analyse reliée à l'unité (7) à capteur,
dans lequel le véhicule (1) est un véhicule (1) guidé sur rail et un montage de la au moins une unité (7) à capteur peut être monté sur le côté inférieur du véhicule (1), et un montage du au moins un profilé (10) d'écartement
- peut être monté sur un rail (20) emprunté par le véhicule (1) ou dans la voie (19) entourant le rail (20), et on mesure alors la distance verticale entre l'unité (7) à capteur et le profilé (10) d'écartement,
ou peut être monté sur une paroi (9) d'environnement se trouvant au point d'arrêt et entourant le véhicule (1), et on mesure alors la distance horizontale entre l'unité (7) à capteur et le profilé (10) d'écartement.

3. Système suivant la revendication 2, dans lequel la au moins une unité (7) à capteur montée sur le véhicule (1) comprend au moins deux capteurs de mesure de distance.

4. Système suivant la revendication 2 ou la revendication 3, dans lequel il est prévu un montage de la au moins une unité (7) à capteur en-dessous d'une porte (2) du véhicule (1).

5. Système suivant l'une des revendications 2 à 3, dans lequel il est prévu au moins deux unités (11) d'analyse disposées sélectivement de chaque côté, ainsi que des unités (7) à capteur ainsi reliées sur le véhicule (1).

6. Système suivant la revendication 5, dans lequel de chaque côté du véhicule (1) sont prévues au moins deux unités (11) d'analyse, ainsi que des unités (7) à capteur ainsi reliées.

7. Système suivant l'une des revendications 2 à 6, dans lequel il est prévu une unité (11) d'analyse ainsi qu'une unité (7) à capteur ainsi reliée, tant sur la première porte (2) qu'également sur la dernière porte (2) de chaque côté du véhicule (1).

8. Système suivant l'une des revendications 2 à 7, dans lequel le véhicule (1) est un train et la au moins une unité (11) d'analyse est intégrée dans un ordinateur de sécurisation de train du véhicule (1).

9. Système suivant l'une des revendications 2 à 8, dans lequel la au moins une unité (11) d'analyse a des moyens de correction automatisés de la courbe de freinage du véhicule (1).

10. Système suivant la revendication 9, dans lequel la au moins une unité (11) d'analyse a en outre des moyens de transmission des valeurs concernant la correction automatisée de la courbe de freinage du véhicule (1) à un dispositif de commande du véhicule (1) .

11. Système suivant l'une des revendications 2 à 10, dans lequel le au moins un profilé (10) d'écartement a la forme d'un rectangle, d'un triangle ou d'un trapèze.

12. Système suivant l'une des revendications 2 à 11, dans lequel le au moins un profilé (10) d'écartement est constitué d'une tôle, de préférence cintrée, d'une pièce en matière plastique ou d'une pièce conformée en béton.

13. Système suivant l'une des revendications 2 à 12, dans lequel le au moins un profilé (10) d'écartement est réalisé en palier sur ses surfaces s'étendant de manière inclinée.

14. Véhicule, notamment véhicule ferroviaire, ayant un dispositif suivant la revendication 1.

15. Procédé de détection et d'optimisation de la précision du point d'arrêt d'un véhicule (1), le véhicule (1) étant un véhicule (1) guidé sur rail,
dans lequel on monte au moins une unité (7) à capteur sur le côté inférieur du véhicule (1),
dans lequel on mesure une distance à un profilé (10) d'écartement monté à un point d'arrêt emprunté par le véhicule (1) et on transmet le résultat de la mesure d'une unité (7) à capteur à au moins une unité (11) d'analyse reliée, et
dans lequel on monte le au moins un profilé (10) d'écartement
- sur un rail (20) emprunté par le véhicule (1) ou dans la voie (19) entourant le rail (20), et on mesure la distance verticale entre l'unité (7) à capteur et le profilé (10) d'écartement, ou
- sur une paroi (9) d'environnement, se trouvant au point d'arrêt et entourant le véhicule (1), et on mesure la distance horizontale entre l'unité (7) à capteur et le profilé (10) d'écartement.
